# EUROPEAN PATENT SPECIFICATION

(11) **EP 2 921 740 B1**
(45) Date of publication and mention of the grant of the patent: **11.07.2018**
(21) Application number: 15380003.2
(22) Date of filing: 12.02.2015
(51) Int. Cl.: F16F 9/49, F16F 9/02, F16F 9/36, F16F 9/48

(54) **GAS CYLINDER WITH A BRAKING EFFECT AT THE MAXIMUM EXTENSION**
GASFLASCHE MIT BREMSWIRKUNG BEI MAXIMALER ERWEITERUNG
CYLINDRE À GAZ AVEC UN EFFET DE FREINAGE À L'EXTENSION MAXIMALE

(30) Priority: 13.02.2014 ES 201400107; 27.05.2014 ES 201430785
(43) Date of publication of application: 23.09.2015
(73) Proprietor: Abain Components, S.L., 20305 Irun Guipuzcoa (ES)
(72) Inventor: Barandiaran Salaverría, José Javier, 20013 San Sebastián (ES)
(74) Representative: Cueto, Sénida

(56) References cited:
- EP-A2- 1 113 185
- FR-A1- 2 376 341
- GB-A- 2 150 261
- US-A1- 2010 230 875

## Description

### Field of the Invention

The invention relates to a gas lift cylinder, or in other words a gas cylinder comprising a generally cylindrical tubular body inside which a shaft and a piston assembly, separating two inner chambers containing gas, are moveable, whereby the gas exerts a force on the piston assembly that tends to push the piston assembly and the shaft in an expansive direction.

### Prior Art

Gas cylinders, which are also called pneumatic cylinders or air cylinders, generally consisting of a cylindrical tubular body, a shaft arranged partially inside the cylinder and partially protruding outside the cylinder, and a piston assembly arranged on the shaft end that is inside the body, are known in the prior art. The piston assembly has a diameter that internally adjusts to the tubular body in such a way that the piston assembly defines two separate chambers or spaces inside the body. Pressurised gas is stored in each of the chambers. The basic principle behind the functioning of a gas cylinder is as follows: the gas in each chamber exerts pressure on the piston assembly, and therefore a force in an opposite direction; a resulting force is produced that tends to move the cylinder in a certain direction. The specific functioning of each cylinder model depends on many design factors of all the elements in the cylinder in general, and the piston assembly, in particular.

A type of gas cylinder commonly used in consumer products and other applications is the gas lift cylinder or gas lifter. This type of cylinder is used, for example, in the furniture sector, to help open or close folding parts of beds, tables and cupboards. It is also commonly used in the construction sector, for example to control the opening of doors or large windows. It is also widely used in the automotive sector, for example to control the opening and closing of the hatchback door of vehicles.

Gas lift cylinders are characterised by the fact that the piston assembly has one or more passageways through which gas is allowed to pass between the two chambers separated by the piston assembly. This enables the gas pressure in the chambers to be equalled. Therefore, the force exerted by the gas in the chamber opposite to the shaft is greater than the pressure exerted by the gas in the chamber in which the shaft is arranged, due to the difference in the size of the respective surfaces of the piston assembly on which these gases exert pressure. Therefore, the resulting force on the piston assembly is aimed towards the end of the body at which the shaft protrudes, so the cylinder tends to expand as a result of the pressure, in other words, the shaft tends to come out of the body and the cylinder tends to increase in length. If a sufficient compressive force is applied to the shaft to overcome the gas resulting force, the cylinder compresses and does so in a slow or dampened manner. For these reasons, gas lift cylinders effectively help to lift heavy objects and ensure their descent at a controlled speed.

However, gas lift cylinders present some limitations. For example, gas lift cylinders are characterised in that the piston assembly moves at a relatively constant speed and in that the piston assembly only stops when it hits the final limit of its path, thus halting with a sharp and sudden blow. This may give the user a feeling of brusqueness and lack of quality in the mechanical design of the vehicle or other product that incorporates the cylinder to move a part (for example to open the hatchback of a vehicle).

To solve this problem, the market offers certain models of gas cylinders internally fitted with rubber stoppers, springs or oil to soften the interior impact of the piston assembly and the shaft with the final limit at the end of its path and to reduce the force that must be exerted to start compressing the cylinder from its maximum extension position.

The patent application US20100230875A1 represents the closest prior art. It discloses the features recited in the pre-characterizing portion of independent claim 1. In particular, it discloses a gas spring with delayed return. The gas spring includes a movable seal that separates a first working chamber from a secondary working chamber. A passage communicates both working chambers. The seal is relatively movable between an open position permitting free flow of gas through the passage and a closed position partially restricting gas flow through the passage. This causes the gas in the secondary working chamber to be compressed, thereby reducing a net return force on the piston and decreasing a velocity of the piston.

This invention aims to design an alternative gas lift cylinder in which the cylinder offers a braking effect or additional cushioning at the end of the extension path of the piston assembly, so that the cylinder ends its expansion gently without coming to a sudden halt.

### Brief Description of the Invention

The object of the invention is a gas cylinder, which comprises a tubular body laid along a longitudinal shaft and having a first end and a second end, and which also comprises a piston assembly and a shaft which can be jointly moved along the interior of the body in the direction of the longitudinal shaft. As in conventional cylinders, the piston assembly adjusts internally to the body and defines a first chamber and a second chamber containing gas. The piston assembly also provides a space for the gas to pass between these chambers, and the shaft crosses the second chamber and protrudes from the second end of the body, so that the gas cylinder acts like a gas lift or expansion cylinder.

The cylinder as per the invention includes a braking mechanism for slowing down the shaft at the end of its expansion with respect to the body; the braking mechanism uses the pressure of the gas contained in the cylinder to brake the piston assembly and the shaft at the end of its extension, eliminating the need to include accessory pieces or substances such as oil, springs or rubber stoppers for braking. To do so, on one hand, the cylinder comprises a tubular piece arranged on the inside of the body and in the area of the second end of the body, whereby the tubular piece is crossed by the shaft and forms an interior cavity between the tubular piece and the shaft. The interior cavity ends with an opening that communicates the interior cavity to the second chamber. In addition, the cylinder comprises a neck which widens the shaft adjacent to the piston 5 assembly, whereby the neck is sized to penetrate inside the interior cavity. Furthermore, the cylinder comprises at least one airtight elastic element at the end of the neck closest to the second end of the body. This airtight elastic element provides an airtight seal in the interior cavity when this end of the neck penetrates inside the interior cavity.

As will be seen in the detailed explanation of the invention, at the end of the shaft expansion, the neck penetrates in the interior cavity, the interior cavity thus becoming isolated from the second chamber by the airtight elastic seal in the neck. Then, the gas that is isolated in the interior cavity starts to be compressed by the moving neck, and on increasing the pressure, a force is exerted on the neck in the opposite direction to that of the shaft movement hence, decelerating it. The braking effect gradually increases as the shaft moves towards its final, most expanded position, and yet the braking is gentle at all times. Therefore, the invention achieves cushioned and gentle braking of the cylinder expansion, using mechanically simple and reasonably cheap parts, whilst being mechanically resistant and presenting a long useful life.

In some embodiments, at least one of the end connectors has an adjustable longitudinal position with respect to the part of the gas cylinder in which this end connector is placed (the first end of the body, and the end of the shaft opposite to the second end of the body, respectively). Hence, the depth of the insertion of the neck in the interior cavity of the tubular piece can be adjusted and therefore the volume of the interior cavities where the gas is isolated during braking can be regulated, thus allowing for adjustment of the braking force exerted by the compressed gas in the interior cavities.

### Brief Description of the Figures

The details of the invention can be seen in the accompanying figures, which do not intend to limit the scope of the invention:
- Figure 1 shows a longitudinal cross-sectional view of a gas cylinder embodiment as per the invention, whereby the gas cylinder is shown in an initial position in which it is relatively compressed.
- Figure 2 shows an enlarged view of the central area of the gas cylinder, shown in a second position in which the gas cylinder has expanded slightly and the piston assembly has begun to brake as per the invention.
- Figure 3 shows a similar view to the previous figure, whereby the gas cylinder is in a third position in which it has expanded fully and in which the piston assembly has reached the end of its path.

- Figure 4 shows a cross-sectional view of a piston assembly as per a second embodiment for the invention.
- Figure 5 shows an exploded view of some components of the piston assembly in Figure 4.
- Figure 6 shows a cross-sectional view of a piston assembly as per a third embodiment of the invention.
- Figure 7 shows a longitudinal cross-sectional view of a fourth embodiment for a gas lift cylinder as per the invention, in a situation in which the shaft is partially expanded and in a final phase of its expansion, in which its speed is being slowed down.
- Figure 8 shows a longitudinal cross-sectional view of the gas cylinder of Figure 7, in a situation of maximum expansion of the shaft, in which the cylinder has reached its maximum length.
- Figure 9 shows a longitudinal cross-sectional view of the gas cylinder of Figure 7, whereby the cylinder is at its maximum expansion and the connection thread opposite the shaft has been partially unthreaded.
- Figure 10 shows a longitudinal cross-sectional view of the gas cylinder of Figure 7, whereby the cylinder is at its maximum expansion and the connection thread opposite the shaft has been unthreaded with respect to the situation of Figure 9.

### Detailed Description of the Invention

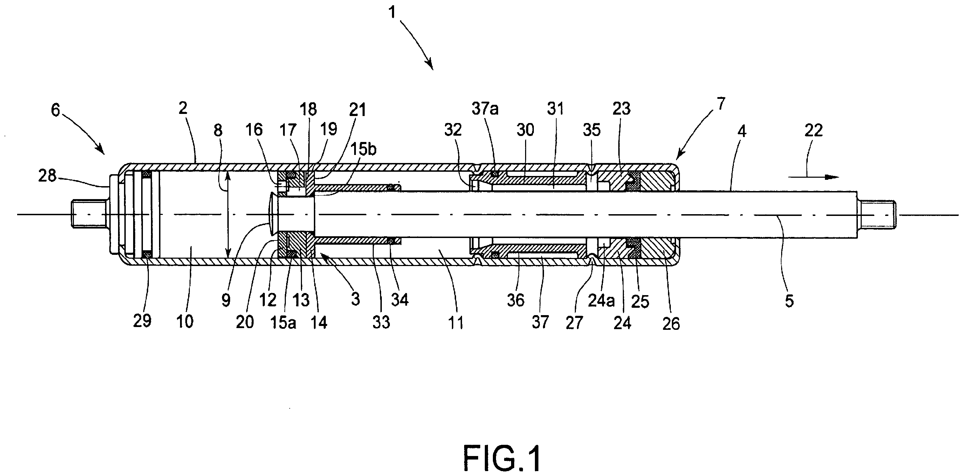

Figure 1 shows a longitudinal cross-sectional view of a first embodiment of the invention, consisting in a gas lift cylinder (1) fitted with a braking device at the end of its expansion range. The gas cylinder (1) shown in the figure has certain aspects that are already known in the prior art. In the first place, the cylinder (1) comprises a hollow tubular body (2), a piston assembly (3) and a shaft (4). The hollow tubular body (2) is formed along a longitudinal axis (5) and has a first end (6), a second end (7) and an inner diameter (8). The shaft (4) is also arranged along the longitudinal axis (5) and, as can be seen, protrudes outwardly from the second end (7) of the body (2). The piston assembly (3) and the shaft (4) are secured to each other via a rivet (9) on the end of the shaft (4), and they are able to translate together along the interior of the body (2) in a longitudinal direction, i.e., in the direction of the longitudinal axis (5). The piston assembly (3) has an outer diameter which adjusts to the inner diameter (8) of the tubular body (2) so that the piston assembly (3) delimits two chambers (10, 11), each containing pressurised gas (e.g., nitrogen). In the depicted exemplary cylinder (1), the piston assembly (3) is made in the form of a series of consecutive pieces that adjust internally to the body (2): a first washer (12), an interior piece (13), a second washer (14), a first airtight elastic seal (15a) and a second airtight elastic seal (15b). The piston assembly (3) further includes a gas passageway (16, 17, 18, 19) which allows gas to pass between the chambers (10, 11), so that the gas pressure is the same in both chambers (10, 11) and, therefore, the pressure exerted by the gas in the first chamber (10) on the walls (20) of the piston assembly (3) facing the first chamber (10) is the same as the pressure exerted by the gas in the second chamber (11) on the walls (21) of the piston assembly (3) facing the second chamber (11). In addition, the surface of the wall (20) of the piston assembly (3) facing the first chamber (10) is greater than the surface of the wall (21) facing the second chamber (11), due to the presence of the shaft (4) on the second chamber (11) side. Therefore, as per the physical law that establishes that the force is the same as the product of the pressure by the surface, the force exerted by the gas in the first chamber (10) is greater than the force exerted by the gas in the second chamber (11). Therefore, the resulting force exerted by the gas on the piston assembly (3) is in the expansion direction (22) indicated in the figure, whereby the module of this resulting force is the same as the product of the surface of the transversal section of the shaft (4) by the gas pressure. The resulting force causes the movement of the piston assembly (3) and the shaft (4) as long as no external force prevents it. Additionally, the second end (7) of the body (2) includes a fixed assembly (23), which includes a first guiding element (24) that guides the shaft (4) in its longitudinal movement, an airtight seal (25) which prevents the gas in the second chamber (11) from being filtered to the exterior by this end of the cylinder (1) and a guiding closure (26) which also guides the shaft (4). A radial punch (27) maintains the fixed assembly (23) in a fixed longitudinal position. In turn, the first end (6) of the body (2) is closed by a plug assembly (28), which also comprises an airtight seal (29) to prevent any gas leakage from the first chamber (10) to the exterior via the plug assembly (28).

The invention proposes a series of additional elements which enable the speed to be slowed down and the force to be reduced as the cylinder (1) approaches its maximum extension, or in other words, only at the end of the translation of the piston assembly (3) and the shaft (4).

As can be seen, the cylinder (1) comprises a tubular piece (30) placed on the inside of the body (2) and in the area of the second end (7) of the body (2), or in other words, at the end of the body (2) from which the shaft (4) protrudes. This tubular piece (30) is crossed through by the shaft (4), and defines an interior cavity (31) between the tubular piece (30) and the shaft (4). The interior cavity (31) ends with an opening (32) that communicates the interior cavity (31) with the second chamber (11). Thus, in the situation of Figure 1, in which the shaft (4) is relatively compressed, or in other words, it is not at the final stages of its expansion, the interior cavity (31) is communicated with the second chamber (11) and contains gas at the same pressure as the gas in the second chamber (11). Furthermore, as can be seen in the figure, the piston assembly (3) comprises a neck (33) adjacent to the shaft (4), with a greater diameter than the shaft (4) and sized to penetrate inside the interior cavity (31) between the tubular piece (30) and the shaft (4). Finally, the cylinder (1) includes at least one airtight elastic element (34) at the end of the neck (33) closest to the second end (7) of the body (2) -it should be noted that the present embodiment only includes one airtight elastic element (34)-. This airtight elastic element (34) is sized to provide an airtight closure of the interior cavity (31) when this end of the neck (33), or in other words, the end provided with the airtight elastic element (34), penetrates inside the interior cavity (31).

In the present embodiment, the cylinder (1) comprises a plurality of additional spaces in addition to the interior cavity (31), communicated with the interior cavity (31) and therefore capable of storing gas at the same pressure as in the interior cavity (31).

Particularly, on one hand, the tubular piece (30) is longitudinally spaced apart from the fixed assembly (23) of the cylinder (1) so that an intermediate cavity (35) is delimited therebetween for gas storage. The interior cavity (31) of the tubular piece (30) is a through pipe that opens to this intermediate cavity (35), and therefore this intermediate cavity (35) is communicated with the interior cavity (31).

In addition, the first guiding element (24) of the fixed assembly (23) has a recess or cavity (24a) facing the interior cavity (31) and communicated with the interior cavity (31). The cavity (24a) provides an additional space for gas storage.

Furthermore, the tubular piece (30) comprises an exterior recess (36), an exterior cavity (37) being thereby delimited between the exterior recess (36) and the body (2). This exterior cavity (37) is isolated from the second chamber (11) by means of an airtight elastic seal (37a). The cylinder (1) comprises a gas through space between this exterior cavity (37) and the interior cavity (31) so that gas is stored at the same pressure in the exterior cavity (37) and in the interior cavity (31). Although it is contemplated that this gas through space can be made in different ways, for example via one or various passageways that directly communicate both cavities (31, 37), in the present embodiment the exterior cavity (37) is communicated with the interior cavity (31) through the intermediate cavity (35), via a gas through space (38) in the form of a small gap between the exterior walls (39) at the end of the tubular piece (30) and the body (2). In this way, the four cavities (31, 35, 24a, 37) are communicated with each other in a simple way, requiring a reasonable manufacturing cost and providing an effective performance.

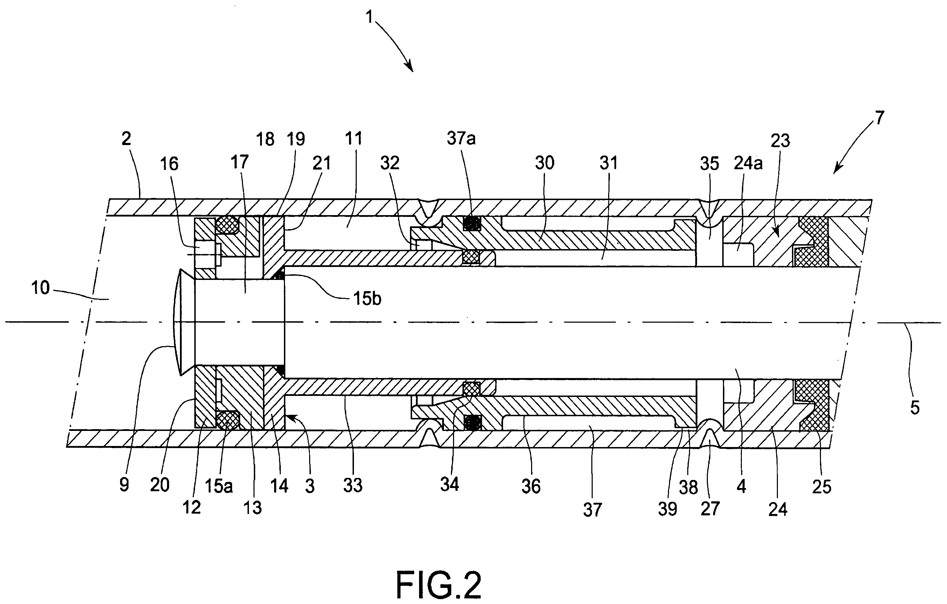

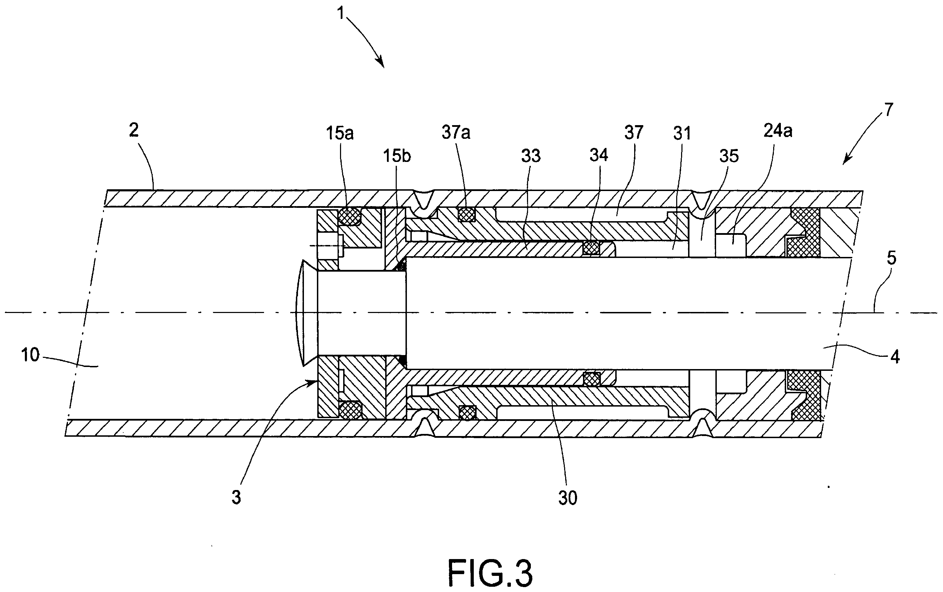

The cylinder (1) of this embodiment works as follows. In the situation of Figure 1, supposing that no force acts on the shaft (4) in a direction opposite to the expansion direction (22) with sufficient force to offset the gas pressure, the piston assembly (3) and the shaft (4) will move in the expansion direction (22) due to the effect of the resulting force of the gas on the piston assembly (3). The piston assembly (3) and the shaft (4) translate at a relatively fast speed, which is determined mainly by the dimensions of the piston assembly (3) and the shaft (4), the dimensions of the gas passageway (16, 17, 18, 19) and the gas pressure. The interior cavity (31) is communicated with the second chamber (11) and therefore the cavities (31, 35, 24a, 37) contain gas at the same pressure as the second chamber (11). As the piston assembly (3) and shaft (4) move, as can be seen in Figure 2, the neck (33) penetrates the interior cavity (31) of the tubular piece (30) and the airtight elastic element (34) comes into contact with the interior walls of the tubular piece (30) and closes fluid communication between the interior cavity (31) and the second chamber (11), together with the airtight elastic seals (37a, 15b). Therefore, the gas contained in the cavities (31, 35, 24a, 37) is isolated from the gas contained in the second chamber (11). Then, as the piston assembly (3) and the shaft (4) continue moving in the expansion direction (22), the gas contained in the cavities (31, 35, 24a, 37) is compressed by the movement of the neck (33) and the airtight elastic element (34). This compressed gas begins to exert a force on the neck (33) in a direction opposite to the expansion direction (22), which counteracts the resulting force of the gas pressure in the chambers (10, 11) on the piston assembly (3). Therefore, the resulting in the expansion direction (22) begins to decrease and the piston assembly (3) and the shaft (4) start to decelerate. As the piston assembly (3) and the shaft (4) continue moving forward, the gas isolated in the cavities (31, 35, 24a, 37) increases in pressure and so does the force against the movement of both, and the deceleration (negative acceleration). Braking increases gradually and is therefore gentle. Eventually, as shown in Figure 3, the neck (33) fully penetrates the interior cavity (31) and the piston assembly (3) reaches the tubular piece (30), coming to halt. Therefore, as explained, the impact at the end of the path of the piston assembly (3) and the shaft (4) is cushioned, without affecting their speed throughout the rest of their path.

In addition to dampening cylinder (1) expansion, the invention leads to the reduction of the force required to start compressing the cylinder (1) from its maximum extension.

In the exemplary embodiment of the invention presented in Figures 1 to 3, the opening (32) is bevelled. This ensures the smooth entry of the neck (33) inside the interior cavity (31) of the tubular piece (30).

In the embodiment shown, the interior cavity (31) between the tubular piece (30) and the shaft (4) is cylindrical and surrounds the perimeter of the shaft (4), allowing gas to be stored in a symmetrical cavity around the longitudinal axis (5). The neck (33) is also cylindrical and surrounds the perimeter of the shaft (4). This cylindrical layout allows a bigger quantity of gas to be trapped within the interior cavity (31), offering more adjustment possibilities, allowing to increase or decrease the braking speed as well as to adjust the force reduction at the maximum extension. Therefore, control on the isolated gas force is more efficient and providing a wider variety of force values and more precise force values.

The neck (33) of this embodiment is a cylindrical protrusion comprised in the piston assembly (3), i.e., a cylindrical protrusion on a piece with a greater diameter that is substantially adjusted to the interior of the body (2). More specifically, in the illustrated embodiment, the neck (33) is a cylindrical protrusion provided on the second washer (14) of the piston assembly (3).

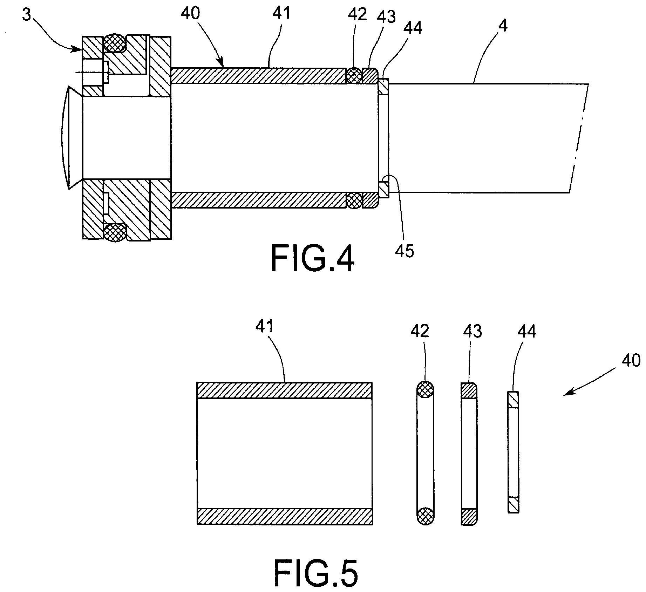

Figure 4 shows an alternative embodiment of the neck as per the invention. In this case, the neck (40) is a set of several parts that is separate from the piston assembly (3), i.e., separated from the parts that are internally adjusted to the body (2). In this embodiment, this set of pieces that makes up the neck (40) includes a cylindrical bushing (41), an airtight elastic element (42), a washer (43) and a fixing clip (44). The latter is arranged inserted in a recess (45) in the shaft (4) and fixes the neck (40) to the shaft (4) so there is no relative longitudinal movement between them. Figure 5 shows an exploded view of the neck (40) allowing for each of the components to be seen separately.

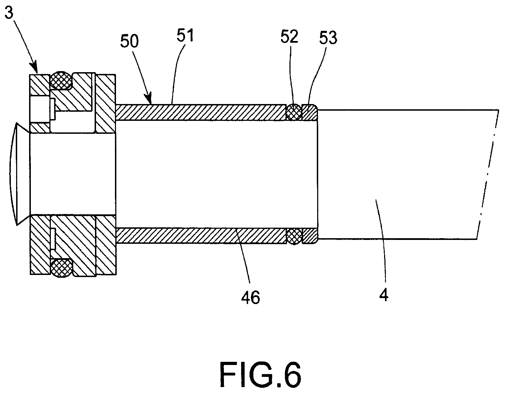

Figure 6 shows an alternative embodiment of the neck as per the invention. In this case, the neck (50) is also a set of various pieces, separate from the piston assembly (3), i.e., separate from the pieces that are internally adjusted to the body (2). In this embodiment, this set of pieces that make up the neck (50) includes a cylindrical bushing (51), an airtight elastic element (52) and a washer (53). The whole neck (50) is found housed in a recess (46) in the shaft (4) and therefore fixed longitudinally to the shaft (4) so there is no relative longitudinal movement between them.

The cylinder (1) shown in Figure 1 is only an exemplary embodiment of the invention; the invention can be applied to different cylinders, for example to cylinders with a different body (2), shaft (4), piston assembly (3) or any other element different to those shown in the figures on which the invention has been applied.

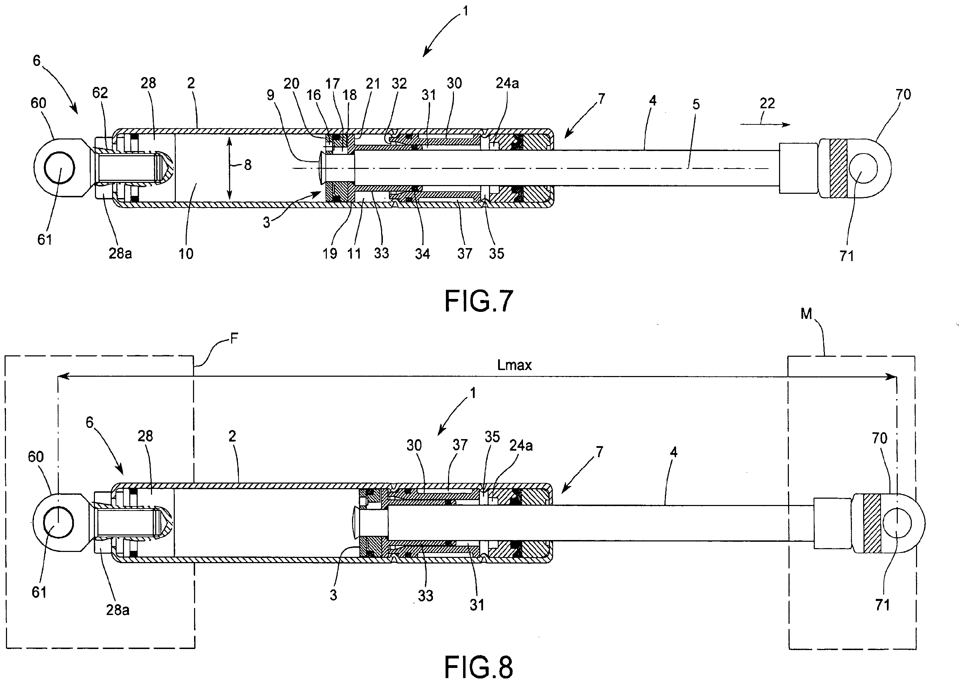

Figures 7 to 10 show an additional embodiment of the invention, in which at least one of the end connectors (60, 70) presents an adjustable longitudinal position so that the relative position of this end connector (60, 70) with respect to the section of the gas cylinder (1) to which it is connected -the first end (6) of the body (2), or the free end of the shaft 84), respectively- can be varied. In consequence, the magnitude of the braking force exerted by the isolated gas inside the cavities (31, 35, 24a, 37) can be adjusted as desired.

For example, in the illustrated embodiment, the end connector (60) placed in the first end (6) of the body (2) is connected via a threaded connection (62) to the plug assembly (28) placed at this first end (7). The plug assembly (28), in turn, presents an anti-rotational exterior portion (28a), for example with a hexagonal shape, for the connection of a key or other tool capable of applying a torque on the anti-rotational exterior portion (28a).

Figures 8 to 10 show the gas cylinder (1) in three situations in which the end connector (60) is longitudinally adjusted in different ways, enabling the functioning of the invention and the subsequent advantages to be illustrated. In the three situations, the end connectors (60, 70) are connected to a moving element (M) and to a fixed element (F).

On one hand, Figure 8 shows the gas cylinder (1) in a situation in which the piston assembly (3) and the shaft (4) are in their maximum expansion position, in which the gas cylinder (1) has acquired a maximum length indicated as "Lmax". Maximum length is understood to be the maximum separation of the centres of the orifices (61, 71), i.e., the maximum separation of the articulated connections at each end of the gas cylinder (1), which is determined by the maximum possible or desired separation between the moving element (M) and the fixed element (F). In this situation of maximum expansion, the piston assembly (3) has reached a position of maximum displacement, in this case, by contacting the tubular piece (30). The neck (33) is introduced as deeply as possible into the interior cavity (31) and the isolated gas in the cavities (31, 35, 37, 24a) is at maximum pressure. Therefore, the compressive force exerted by this gas is maximum.

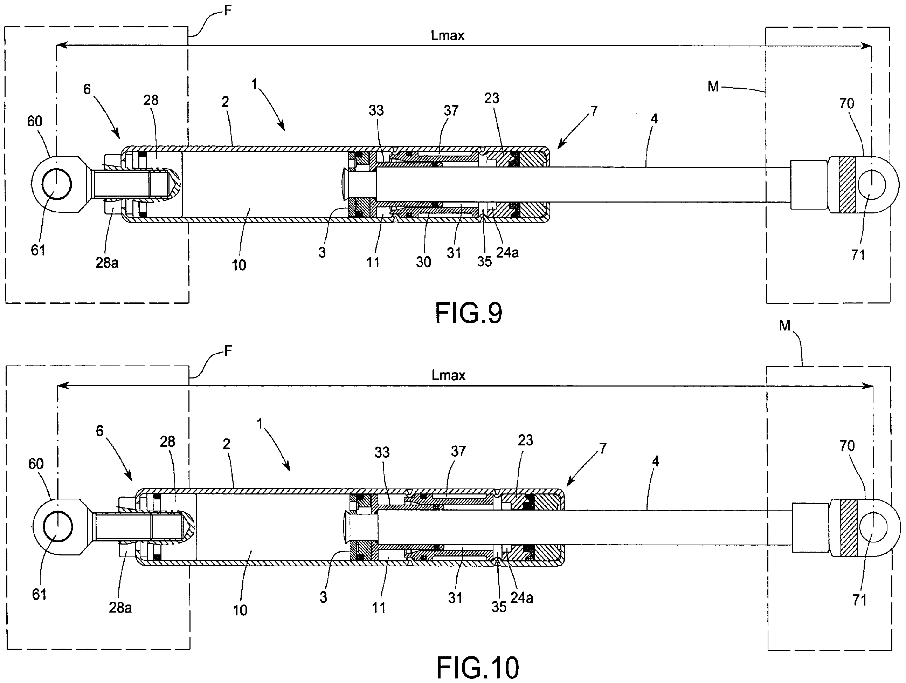

Figure 9 shows the previous gas cylinder (1) in a situation in which a key has been used on the anti-rotational exterior portion (28a) of the plug assembly (28) of the first end (6) of the body (2). Since that the maximum separation indicated by Lmax cannot be increased, i.e., the maximum separation of the fixed element (F) and the moving element (M) is maintained constant, the action of the key on the anti-rotational exterior portion (28a) has led to the end connector (60) becoming slightly unthreaded from the plug assembly (28). Therefore, the body (2) -including the plug assembly (28)- has been longitudinally moved towards the right (as per the position in the figure), whilst the shaft (4) has been maintained in a fixed position; or in other words, the shaft (4) has been slightly compressed towards the body (2). Therefore, the piston assembly (3) has been slightly separated from the tubular piece (30) and the neck (33) has partially exited the interior cavity (31). The gas confined in the cavities (31, 35, 37, 24a) now has more space and therefore its pressure has been reduced. The compressive force exerted by this gas is lower. This means that if the gas cylinder (1) is left in this adjustment, the next time the gas cylinder (1) expands in order to separate the moving element (M) from the fixed element (F), the braking force exerted by the isolated gas in the cavities (31, 35, 37, 24a) will be lower and therefore the cushioning will be lower.

Figure 10 shows the previous gas cylinder (1) in a situation in which it has been adjusted so that the end connector (60) protrudes to a greater extent from the body (2). Therefore, the gas cylinder (1) will offer an even lower cushioning than in the case in Figure 9.

Alternatively to the embodiment shown in Figures 7 to 10, it is contemplated that the end connector (70) placed at the free end of the shaft (4) can have an adjustable longitudinal position with respect to the shaft (4), for example by having the end connector (70) threaded to the shaft (4) and the shaft (4) having a similar anti-rotational exterior portion to the previously detailed anti-rotational exterior portion (28a). Embodiments in which both end connectors (60, 70) have an adjustable longitudinal position with respect to the body (2) and the shaft (4), respectively, are also contemplated.

## Claims

1. Gas cylinder (1), which comprises a tubular body (2) arranged along a longitudinal axis (5) and having a first end (6) and a second end (7), and which also comprises a piston assembly (3) and a shaft (4) that are jointly movable in the interior of the body (2) in the direction of the longitudinal axis (5), wherein the piston assembly (3) is adjusted internally to the body (2) and delimits a first chamber (10) and a second chamber (11) containing gas, where the piston assembly (3) also provides a gas passageway (16, 17, 18, 19) between said chambers (10, 11), and wherein the shaft (4) is arranged through the second chamber (11) and protrudes from the second end (7) of the body (2), the gas cylinder (1) comprising:
- a tubular piece (30) arranged in the interior of the body (2) and in the area of the second end (7) of the body (2), wherein the tubular piece (30) is crossed through by the shaft (4) leaving an interior cavity (31) between the tubular piece (30) and the shaft (4), wherein the interior cavity (31) ends in an opening (32) that communicates the interior cavity (31) with the second chamber (11); wherein
- the cylinder (1) comprises a neck (33; 40; 50) adjacent to the piston assembly (3) and that widens the shaft (4), whereby this neck (33; 40; 50) is sized to penetrate inside the interior cavity (31),
**characterised in that** the cylinder (1) comprises a plurality of additional spaces, in addition to the interior cavity (31), communicated with the interior cavity (31) and therefore capable of storing gas at the same pressure as in the interior cavity (31), wherein said plurality of additional spaces comprises:
- an exterior cavity (37), delimited between an exterior recess (36) of the tubular piece (30) and the body (2),
- an intermediate cavity (35), delimited between the tubular piece (30) and a fixed assembly (23) located at the second end (7) of the body (2), wherein the cylinder (1) comprises a gas through space (38) between the intermediate cavity (35) and the exterior cavity (37), and wherein
- at least one airtight elastic element (34; 42; 52) is placed on an end of the neck (33; 40; 50) closest to the second end (7) of the body (2), wherein the airtight elastic element (34; 42; 52) provides an airtight closure in the interior cavity (31) and in the additional spaces when the end of the neck (33; 40; 50) penetrates within the interior cavity (31).

2. Cylinder (1), according to claim 1, **characterised in that** the interior cavity (31) between the tubular piece (30) and the shaft (4) is cylindrical and surrounds the perimeter of the shaft (4).

3. Cylinder (1), according to claim 1, **characterised in that** the opening (32) is bevelled.

4. Cylinder (1), according to claim 1, **characterised in that** the cylinder (1) comprises a gas passageway between the exterior cavity (37) and the interior cavity (31).

5. Cylinder (1), according to claim 1, **characterised in that** the fixed assembly (23) is configured to seal the second chamber (11) and guide the shaft (4).

6. Cylinder (1), according to claim 1, **characterised in that** the fixed assembly (23) includes at least one cavity (24a), facing the interior cavity (31) and communicated with the interior cavity (31) through the intermediate cavity (35), thus providing an additional space for gas storage.

7. Cylinder (1), according to claim 1 or 6, **characterised in that** the volume of the cavities (31, 37, 35, 24a) is adjustable.

8. Cylinder (1), according to claim 1, **characterised in that** the neck (33) is a cylindrical protrusion comprised in the piston assembly (3).

9. Cylinder (1), according to claim 1, **characterised in that** the neck (40; 50) is a set of one or more pieces that is separate from the piston assembly (3), is adjacent to the piston assembly (3) and is longitudinally fixed to the piston assembly (3).

10. Cylinder (1), according to claim 9, **characterised in that** the neck (40; 50) is partially or fully inserted in an area of the shaft (4) with a reduced diameter.

11. Cylinder (1), according to claim 10, **characterised in that** the neck (40) comprises an attachment clip (44) located at the end of the neck (40) opposite to the piston assembly (3) and inserted in a recess (45) of the shaft (4).

12. Cylinder (1), according to claim 10, **characterised in that** the neck (50) is fully inserted in a recess (46) of the shaft (4).

13. Cylinder (1), according to claim 1, **characterised in that**:
- the body (2) of the gas cylinder (1) comprises an end connector (60) arranged at the first end (6) of the body (2), and
- the shaft (4) of the gas cylinder (1) has an end connector (70) arranged on an end of the shaft (4) opposite the second end (7) of the body (2), wherein
- at least one of the end connectors (60, 70) has an adjustable longitudinal position, respectively, with respect to the first end (6) of the body (2) and with respect to the end of the shaft (4) opposite the second end (7) of the body (2).

14. Cylinder (1), according to claim 13, **characterised in that** the end connector (60) arranged at the first end (6) of the body (2) is connected via a threaded connection (62) to a plug assembly (28) arranged at the first end (6).

15. Cylinder (1), according to claim 14, **characterised in that** the plug assembly (28) has an anti-rotational exterior portion.

16. Cylinder (1), according to claim 13, **characterised in that** the end connector (70) placed on the end of the shaft (4) opposite to the second end (7) of the body (2) is connected to the shaft (4) via a threaded connection.

17. Cylinder (1), according to claim 16, **characterised in that** the shaft (4) has an anti-rotational exterior portion.

## Patentansprüche

1. Gaszylinder (1), der einen rohrförmigen Körper (2) umfasst, welcher entlang einer Längsachse (5) angeordnet ist und ein erstes Ende (6) und ein zweites Ende (7) hat, und der auch eine Kolbenbaugruppe (3) und eine Achse (4) umfasst, die gemeinsam im Inneren des Körpers (2) in Richtung Längsachse (5) bewegbar sind, wobei die Kolbenbaugruppe (3) intern am Körper (2) angepasst ist und eine erste Kammer (10) und eine zweite Kammer (11) begrenzt, die Gas enthalten, wobei die Kolbenbaugruppe (3) auch für einen Gasdurchgang (16, 17, 18, 19) zwischen besagten Kammern (10, 11) sorgt, und die Achse (4) durch die zweite Kammer (11) hindurch angeordnet ist und vom zweiten Ende (7) des Körpers (2) hervorsteht, wobei der Gaszylinder (1) Folgendes umfasst:
- ein rohrförmiges Stück (30), angeordnet im Inneren des Körpers (2) und im Bereich des zweiten Endes (7) des Körpers (2), wobei das rohrförmige Stück (30) von der Achse (4) durchquert wird und ein innerer Hohlraum (31) zwischen dem rohrförmigen Stück (30) und der Achse (4) hinterlassen wird, wobei der innere Hohlraum (31) in einer Öffnung (32) endet, die den inneren Hohlraum (31) mit der zweiten Kammer (11) verbindet; wobei
- der Zylinder (1) einen Hals (33; 40; 50) umfasst, der an die Kolbenbaugruppe (3) angrenzt, und der die Achse (4) verbreitert, wobei dieser Hals (33; 40; 50) so dimensioniert ist, um in den inneren Hohlraum (31) einzudringen,
**dadurch gekennzeichnet, dass** der Zylinder (1) eine Vielzahl von zusätzlichen Räumen umfasst, zusätzlich zum inneren Hohlraum (31), verbunden mit dem inneren Hohlraum (31), und daher in der Lage, Gas mit dem gleichen Druck zu speichern, wie im inneren Hohlraum (31), wobei besagte Vielzahl von zusätzlichen Räumen Folgendes umfasst:
- einen äußeren Hohlraum (37), begrenzt zwischen einem äußeren Einschnitt (36) des rohrförmigen Stücks (30) und dem Körper (2),
- einen Zwischenhohlraum (35), begrenzt zwischen dem rohrförmigen Stück (30) und einer festen Baugruppe (23), gelegen am zweiten Ende (7) des Körpers (2), wobei der Zylinder (1) einen Raum für den Gasdurchgang (38) zwischen dem Zwischenhohlraum (35) und dem äußeren Hohlraum (37) umfasst, und wobei
- mindestens ein luftdichtes elastisches Element (34; 42; 52) an einem Ende des Halses (33; 40; 50), das dem zweiten Ende (7) des Körpers (2) am nächsten liegt, angebracht wird, wobei das luftdichte elastische Element (34; 42; 52) für einen luftdichten Abschluss im inneren Hohlraum (31) und in den zusätzlichen Räumen sorgt, wenn das Ende des Halses (33; 40; 50) im inneren Hohlraum (31) eindringt.

2. Zylinder (1) gemäß Anspruch 1, **dadurch gekennzeichnet, dass** der innere Hohlraum (31) zwischen dem rohrförmigen Stück (30) und der Achse (4) zylindrisch ist und den gesamten Umfang der Achse (4) umschließt.

3. Zylinder (1) gemäß Anspruch 1, **dadurch gekennzeichnet, dass** die Öffnung (32) abgekantet ist.

4. Zylinder (1) gemäß Anspruch 1, **dadurch gekennzeichnet, dass** der Zylinder (1) einen Gasdurchgang zwischen dem äußeren Hohlraum (37) und dem inneren Hohlraum (31) umfasst.

5. Zylinder (1) gemäß Anspruch 1, **dadurch gekennzeichnet, dass** die feste Baugruppe (23) konfiguriert ist, um die zweite Kammer (11) abzudichten und die Achse (4) zu führen.

6. Zylinder (1) gemäß Anspruch 1, **dadurch gekennzeichnet, dass** die feste Baugruppe (23) mindestens einen Hohlraum (24a) umfasst, der dem inneren Hohlraum (31) gegenüberliegt und mit dem inneren Hohlraum (31) durch den Zwischenhohlraum (35) verbunden ist, womit für zusätzlichen Raum für die Gasspeicherung gesorgt wird.

7. Zylinder (1) gemäß Anspruch 1 oder 6, **dadurch gekennzeichnet, dass** das Volumen der Hohlräume (31, 37, 35, 24a) einstellbar ist.

8. Zylinder (1) gemäß Anspruch 1, **dadurch gekennzeichnet, dass** der Hals (33) ein zylindrischer Vorsprung ist, der in der Kolbenbaugruppe (3) umfasst ist.

9. Zylinder (1) gemäß Anspruch 1, **dadurch gekennzeichnet, dass** der Hals (40; 50) ein Satz von einem oder mehreren Teilen ist, der von der Kolbenbaugruppe (3) getrennt ist, an die Kolbenbaugruppe (3) angrenzt und längs an der Kolbenbaugruppe (3) befestigt wird.

10. Zylinder (1) gemäß Anspruch 9, **dadurch gekennzeichnet, dass** der Hals (40; 50) teilweise oder vollständig in einem Bereich der Achse (4) eingefügt ist, der einen reduzierten Durchmesser hat.

11. Zylinder (1) gemäß Anspruch 10, **dadurch gekennzeichnet, dass** der Hals (40) einen Befestigungsclip (44) umfasst, der sich am Ende des Halses (40) gegenüber der Kolbenbaugruppe (3) befindet und in einen Einschnitt (45) der Achse (4) eingefügt ist.

12. Zylinder (1) gemäß Anspruch 10, **dadurch gekennzeichnet, dass** der Hals (50) vollständig in einen Einschnitt (46) der Achse (4) eingefügt ist.

13. Zylinder (1) gemäß Anspruch 1, **dadurch gekennzeichnet, dass**:
- der Körper (2) des Gaszylinders (1) einen Endverbinder (60) umfasst, der am ersten Ende (6) des Körpers (2) angeordnet ist, und
- die Achse (4) des Gaszylinders (1) einen Endverbinder (70) hat, der am Ende der Achse (4) gegenüber dem zweite Ende (7) des Körpers (2) angeordnet ist, wobei
- mindestens einer der Endverbinder (60, 70) eine einstellbare Längsposition hat, jeweils bezüglich dem ersten Ende (6) des Körpers (2) und bezüglich des Endes der Achse (4) gegenüber dem zweiten Ende (7) des Körpers (2).

14. Zylinder (1) gemäß Anspruch 13, **dadurch gekennzeichnet, dass** der Endverbinder (60), der am ersten Ende (6) des Körpers (2) angeordnet ist, mit Hilfe eines Gewindeanschlusses (62) an eine Steckeranordnung (28) verbunden ist, die am ersten Ende (6) angeordnet ist.

15. Zylinder (1) gemäß Anspruch 14, **dadurch gekennzeichnet, dass** die Steckeranordnung (28) einen rotationsstabilen äußeren Teil hat.

16. Zylinder (1) gemäß Anspruch 13, **dadurch gekennzeichnet, dass** der Endverbinder (70), der am Ende der Achse (4) gegenüber dem zweiten Ende (7) des Körpers (2) angebracht ist, mit Hilfe eines Gewindeanschlusses mit der Achse (4) verbunden ist.

17. Zylinder (1) gemäß Anspruch 16, **dadurch gekennzeichnet, dass** die Achse (4) einen rotationsstabilen äußeren Teil hat.

## Revendications

1. Cylindre de gaz (1), qui comprend un corps tubulaire (2) disposé le long d'un axe longitudinal (5) et avec une première extrémité (6) et une seconde extrémité (7), qui comprend également un ensemble de piston (3) et un axe (4) qui sont déplaçables conjointement à l'intérieur du corps (2) dans le sens de l'axe longitudinal (5), où l'ensemble du piston (3) est réglé en interne sur le corps (2) et délimite une première chambre (10) et une seconde chambre (11) contenant du gaz, où l'ensemble de piston (3) fournit également un conduit de passage de gaz (16, 17, 18, 19) entre lesdites chambres (10, 11), et où l'axe (4) traverse la seconde chambre (11) et sort de la seconde extrémité (7) du corps (2), le cylindre de gaz (1) comprenant:
- une pièce tubulaire (30) disposée à l'intérieur du corps (2) et dans la partie de la seconde extrémité (7) du corps (2), où la pièce tubulaire (30) est traversée par l'axe (4) en laissant une cavité intérieure (31) entre la pièce tubulaire (30) et l'axe (4), où la cavité intérieure (31) termine dans une ouverture (32) qui fait communiquer la cavité intérieure (31) avec la seconde chambre (11); où
- le cylindre (1) comprend un col (33, 40, 50) adjacent à l'ensemble de piston (3) et qui élargit l'axe (4), où ce col (33, 40, 50) a la dimension nécessaire pour pénétrer à l'intérieur de la cavité intérieure (31),
**caractérisé par le fait que** le cylindre (1) comprend une pluralité d'espaces supplémentaires, en plus de la cavité intérieure (31), communiquée avec la cavité intérieure (31) et par conséquent capable de contenir du gaz à la même pression que dans la cavité intérieure (31), où ladite pluralité d'espaces supplémentaire comprend:
- une cavité extérieure (37) délimitée entre une encoche extérieure (36) de la pièce tubulaire (30) et du corps (2),
- une cavité intermédiaire (35), délimitée entre la pièce tubulaire (30) et un ensemble fixé (23) situé sur la seconde extrémité (7) du corps (2), où le cylindre (1) comprend un espace de passage de gaz (38) entre la cavité intermédiaire (35) et la cavité extérieure (37), et où
- au moins un élément élastique étanche (34, 42, 52) est placé sur une extrémité du col (33, 40, 50) la plus proche de la seconde extrémité (7) du corps (2), où l'élément élastique étanche (34, 42, 52) fournit une fermeture étanche dans la cavité intérieure (31) et dans les espaces supplémentaires lorsque l'extrémité du col (33, 40, 50) pénètre dans la cavité intérieure (31).

2. Cylindre (1), conformément à la revendication 1, **caractérisé par le fait que** la cavité intérieure (31) entre la pièce tubulaire (30) et l'axe (4) est cylindrique et entoure le périmètre de l'axe (4).

3. Cylindre (1), conformément à la revendication 1, **caractérisé par le fait que** l'ouverture est (32) biseautée.

4. Cylindre (1), conformément à la revendication 1, **caractérisé par le fait que** le cylindre (1) comprend une conduite de passage de gaz entre la cavité extérieure (37) et la cavité intérieure (31).

5. Cylindre (1), conformément à la revendication 1, **caractérisé par le fait que** l'ensemble fixé (23) est configuré pour faire le joint de la seconde chambre (11) et guider l'axe (4).

6. Cylindre (1), conformément à la revendication 1, **caractérisé par le fait que** l'ensemble fixe (23) comprend au moins une cavité (24a), qui fait face à la cavité intérieure (31) et est communiquée avec la cavité intérieure (31) par la cavité intermédiaire (35), ce qui fournit un espace supplémentaire pour stocker le gaz.

7. Cylindre (1), conformément à la revendication 1 ou 6, **caractérisé par le fait que** le volume des cavités (31, 37, 35, 24a) est réglable.

8. Cylindre (1), conformément à la revendication 1, **caractérisée par le fait que** le col (33) est une protubérance cylindrique comprise dans l'ensemble de piston (3).

9. Cylindre (1), conformément à la revendication 1, **caractérisé par le fait que** le col (40, 50) est un ensemble d'une ou de plusieurs pièces qui est séparé de l'ensemble de piston (3), est adjacent à l'ensemble de piston (3) et est fixé dans le sens de la longueur à l'ensemble de piston (3).

10. Cylindre (1), conformément à la revendication 9, **caractérisé par le fait que** le col (40, 50) est partiellement ou totalement inséré dans une zone de l'axe (4) avec un diamètre réduit.

11. Cylindre (1), conformément à la revendication 10, **caractérisé par le fait que** le col (40) comprend un clip de fixation (44) situé à la fin du col (40) à l'opposé de l'ensemble de piston (3) et insérée dans une encoche (45) de l'axe (4).

12. Cylindre (1), conformément à la revendication 10, **caractérisé par le fait que** le col (50) est totalement inséré dans une encoche (46) de l'axe (4).

13. Cylindre (1), conformément à la revendication 1, **caractérisé par le fait que**
- le corps (2) du cylindre de gaz (1) comprend un raccord terminal (60) disposé sur la première extrémité (6) du corps (2) et
- l'axe (2) du cylindre de gaz (1) comprend un raccord terminal (70) disposé sur une extrémité de l'axe (4) à l'opposé de la seconde extrémité (7) du corps (2), où
- au moins l'un des raccords terminaux (60, 70) a une position longitudinal réglable, respectivement, par rapport à la première extrémité (6) du corps (2) et par rapport à l'extrémité de l'axe (4) à l'opposé de la seconde extrémité (7) du corps (2).

14. Cylindre (1), conformément à la revendication 13, **caractérisé par le fait que** le raccord terminal (60) disposé sur la première extrémité (6) du corps (2) est relié par une connexion filetée (62) à un bouchon (28) disposé sur la première extrémité (6).

15. Cylindre (1), conformément à la revendication 14, **caractérisé par le fait que** le bouchon (28) a une partie extérieure anti-rotation.

16. Cylindre (1), conformément à la revendication 13, **caractérisé par le fait que** le raccord terminal (70) placé sur l'extrémité de l'axe (4) à l'opposé de la seconde extrémité (7) du corps (2) est connecté à l'axe (4) par une connexion filetée.

17. Cylindre (1), conformément à la revendication 16, **caractérisé par le fait que** l'axe a une partie extérieure anti-rotation.
